# EUROPEAN PATENT SPECIFICATION

(11) **EP 1 624 224 B1**
(45) Date of publication and mention of the grant of the patent: **14.05.2008**
(21) Application number: 04254762.0
(22) Date of filing: 06.08.2004
(51) Int. Cl.: F16G 11/00

(54) **A method for infusing a region of strands in a cable with liquid potting compound**
Verfahren zum Umgiessen von Seilsträngen mit flüssiger Vergussmasse
Procédé d'enrobage d'une portion de cable avec une composition liquide

(43) Date of publication of application: 08.02.2006
(73) Proprietor: Bright Technologies LLC, Tallahassee, Florida 32309 (US)
(72) Inventor: Campbell, Richard V., Tallahassee Florida 32309 (US); Barefield, Kevin J., Tallahassee Florida 32309 (US)
(74) Representative: JENSEN & SON

(56) References cited:
- DE-C- 200 897
- NL-A- 7 212 077
- US-A1- 2003 010 966

## Description

This invention relates to the field of cables and ropes. More specifically, the invention comprises a process for infusing liquid potting compound into the strands of a rope or cable prior to affixing an anchor or for other uses.

Devices for mounting a termination on the end of a rope or cable are disclosed in detail in U.S. Application Serial No. 60/404973 (Publication No. US2004/0083607) and also in NL 7212077. Throughout this disclosure, the term "strand" will be used to describe the constituents of synthetic cables, natural-fiber cables, and ropes. Although synthetic cables are used for the illustrations, the reader should understand that the methods and devices disclosed are equally applicable to any type of stranded cable.

It is often useful to affix a piece of hardware to the end of a cable. Examples of hardware would be threaded fasteners, hooks, and eyes. Such hardware will be generically referred to as an "anchor." Anchors typically have an expanding internal passage or some type of interlocking features, such as ridges. The strands proximate the end of a cable are wetted with liquid potting compound. The wetted strands are then placed within the internal passage of the anchor. The potting compound then hardens to form a solid, thereby locking a length of strands into the anchor. The anchor, along with the contained strands and solid potting compound will be referred to as a "termination."

Those skilled in the art will know that the term "potting compound" generally refers to any liquid which can be transformed into a solid (such as by air-drying, cooling, reacting with a catalyst, etc.). Examples include thermoplastics, molten metals, thermoset plastics, and reactive compounds (such as two-part epoxies).

Two methods of infusing liquid potting compound into the strands of a cable are in common use. These are: (1) Pulling an anchor into its final position around the exposed strands and pouring the liquid potting compound into an open end of the anchor; or (2) Infusing the exposed strands with liquid potting compound, then pulling the anchor into its final position (The infusion is typically accomplished via painting on the liquid potting compound or dipping the exposed strands into a vat of liquid potting compound).

Under either approach, the potting compound may fail to fully infuse the strands. Moreover, both approaches must generally be performed manually, resulting in drastic variations from termination to termination.

According to the present invention there is provided a method for infusing a region of strands in a cable with liquid potting compound, comprising:
a. exposing said region of strands in said cable;
b. providing a mold including
   i. a strand cavity;
   ii. an infeed runner for carrying said liquid potting compound, wherein said infeed runner leads into said strand cavity;
c. placing said region of strands within said strand cavity within said mold; and
d. injecting said liquid potting compound into said strand cavity through said infeed runner, so that said liquid potting compound infuses throughout said region of strands.

A second venting passage is preferably employed, so that the liquid potting compound flows through the mold without trapping any air pockets. After infusion and before the liquid potting compound hardens, the mold is opened.

Preferred embodiments of the invention will now be described by way of example with reference to the accompanying drawings in which:-
FIG. 1 is an isomeric view, showing various cable strand configurations.
FIG. 2 is an isometric view, showing the operation of a mold.
FIG. 3 is an isometric view, showing internal passages within the mold.
FIG. 4 is an isometric section view, showing the mold base.
FIG. 5 is an isometric view, showing the installation of an anchor.
FIG. 6 is an isometric view, showing the installation of an anchor.
FIG. 7 is an isometric view, showing the mold on an assembly line.
FIG. 8 is an isometric view, showing a cable clamped within a mold.
FIG. 9 is an isometric view, showing an injector.
FIG. 9B is an isometric view, showing an alternate injector.
FIG. 10 is an isometric section view, showing the operation of an injector.
FIG. 11 is an isometric section view, showing the operation of an injector.

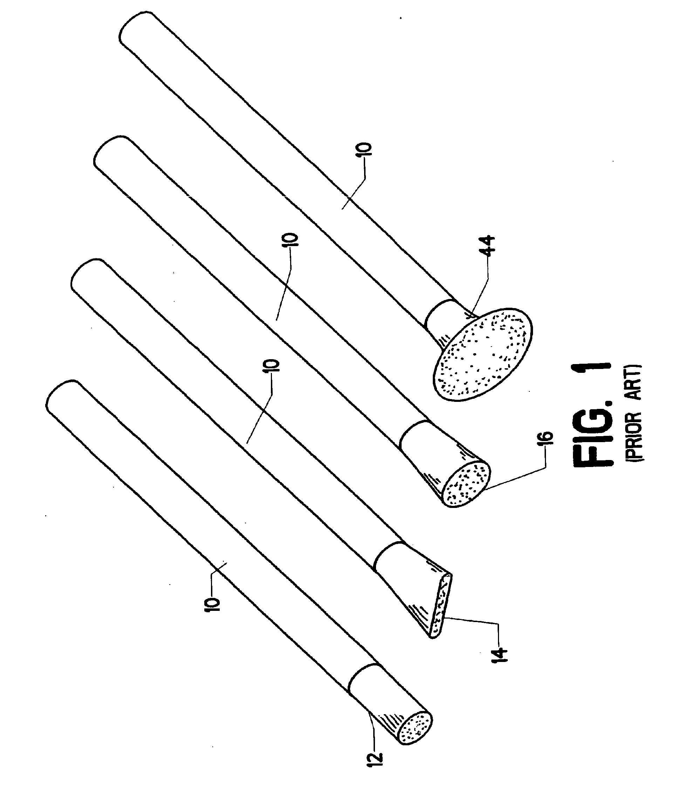

FIG. 1 shows four cables **10** with exposed strands in varying configurations. The far left example shows core strands **12** exposed and ready for potting in an undisturbed state. Proceeding to the right, the next example shows the exposed strands being compressed to form fanned strands **14.** The next example shows the exposed strands being splayed to form conical strands **16.** The far right example shows the strands being splayed apart further to form radially fanned strands **44.** All these examples, as well as others, may be employed prior to infusing the exposed strands with liquid potting resin.

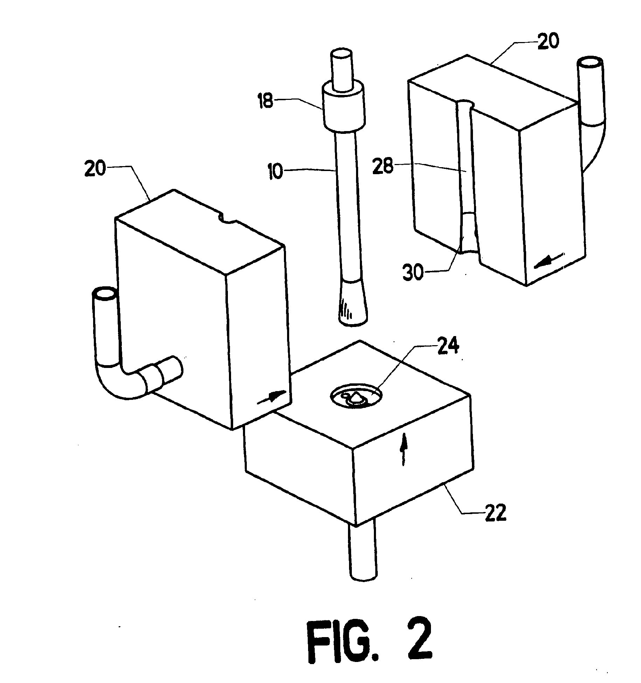

FIG. 2 shows one embodiment of the present invention. Anchor **18** is placed on cable **10** and pulled away from the exposed end strands to the position shown. Cable **10** is then positioned between the upper mold portions **20** (In the example shown, two mold portions are used. The upper portion of the mold can also be split into three or more portions). Each upper mold portion **20** preferably includes a cable cavity **28** and a strand cavity **30.** Mold base **22** lies beneath cable **10.** The two upper mold portions **20** clamp securely together, as indicated by the arrows. This action results in cable **10** being held tightly within the internal passages in the two upper mold portions.

Mold base **22** then moves upward to seal off the bottom of cable **10.** Those skilled in the art will realize that the type of mold shown is but one among many. The mold could split in other ways, move together in different ways, etc.

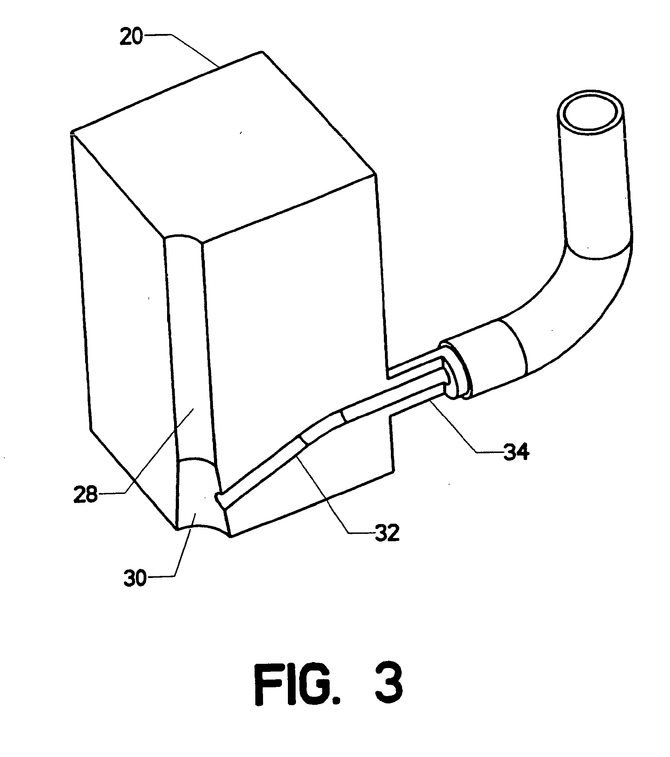

Once the mold closes, cable **10** is held securely within the internal passages. FIG. 3 is a sectional view of one of the two upper mold portions **20.** The reader will observe that infeed runner **32** connects liquid coupling **34** with strand cavity **30.** When clamped in place, preferably pressurized liquid potting compound is forced through infeed runner **32** where it emerges in and around the exposed strands of cable **10.** Cable cavity **28** is clamped securely around the rest of cable **10,** thereby preventing the liquid potting compound from diffusing upward beyond the exposed end strands. As an alternative, a fairly loose fit can be provided around cable **10** so that entrapped air can vent past cable **10.** The second upper molding portion can be equipped with a corresponding infeed runner. Additional infeed runners could also be provided in the mold base.
An infeed runner could be placed at virtually any location and in any orientation within strand cavity **30.**

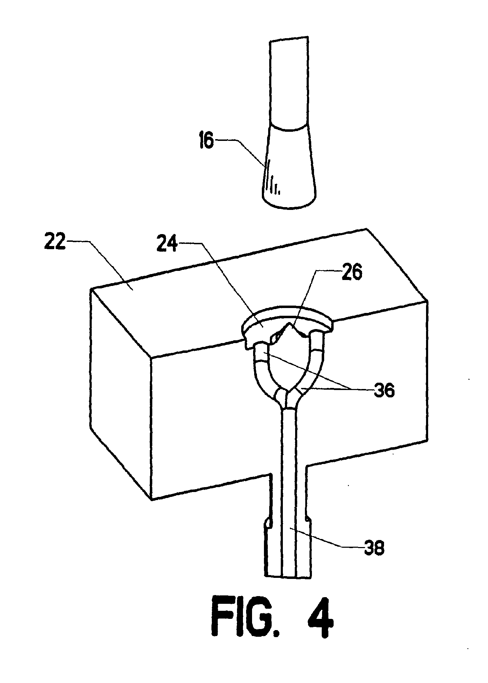

FIG. 4 is an isometric section view of mold base **22.** Its upper surface opens into strand cavity **24** (A flat upper surface having no recess can also be used). A conically shaped separator **26** may be provided in the middle in order to splay the exposed strands of the cable when mold base **22** is moved up into position. Mold base **22** is preferably equipped with one or more liquid vents **36.** These connect to vent coupling **38.** In operation, the mold parts are clamped together to form the enclosed strand cavity **30.** Liquid potting compound is then forced under pressure into the mold through infeed runners **32.** Liquid vents **36** allow air within the mold cavity to escape. Eventually, liquid potting compound completely fills the cavity and flows out through liquid vents **36.** A vacuum may be applied to vent coupling **38** in order to promote faster flow or more complete liquid potting compound infusion.

As an alternative, the infeed runners and liquid vents can be reversed so that the liquid potting compound flows from the bottom to the top. Vacuum and pressure can also be used interchangeably to create the desired flow. Although the runners and vents have been shown as circular, those skilled in the art will know that they could also be made with an oval cross section, a square cross section, or any other desired shape.

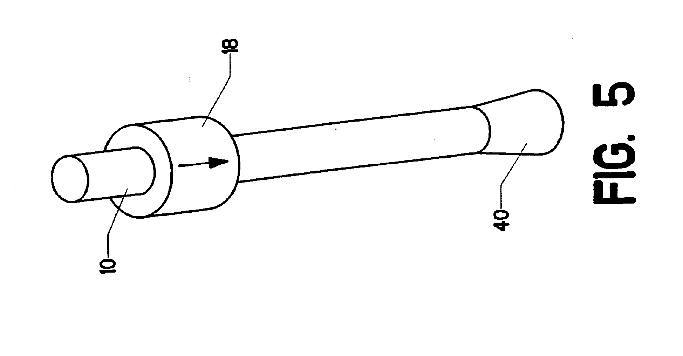

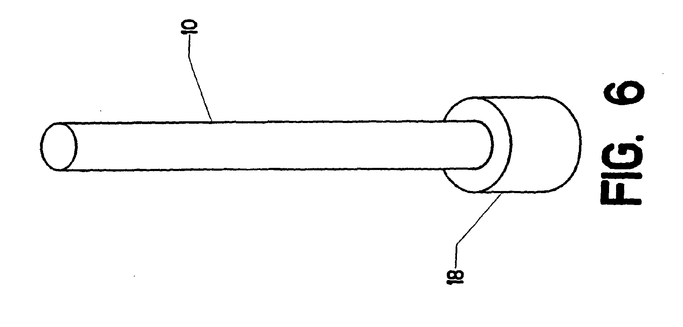

FIG. 5 shows cable **10** after its end strands have been infused with liquid potting compound within the mold. The end strands are now denoted as infused strands **40.** Anchor **18** is then moved down in the direction shown until it encloses the infused end strands (or otherwise mechanically interlocks). Anchor **18** is shown in its final position in FIG. 6. It remains in this position while the liquid potting compound hardens into a solid, thereby forming a completed termination. As an alternative, anchor **18** can be slid into position from the opposite end of the cable after the liquid potting compound is applied.

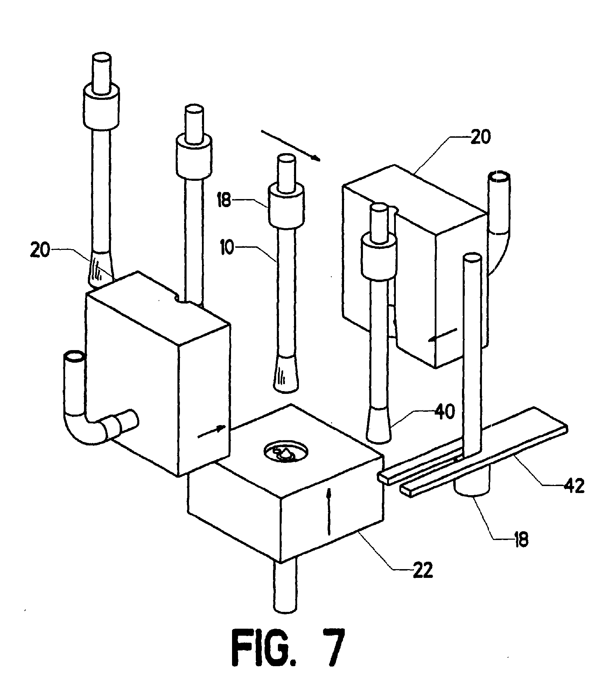

FIG. 7 shows the application of the devices and processes disclosed to an assembly line. A series of cables **10 -** with anchors **18** in an appropriate position, are sequentially fed along the line in the direction indicated by the arrow. The middle cable **10** is set to be clamped within the mold components. Its exposed end strands will then be infused with liquid potting compound. The cable **10** immediately to the right of the middle cable **10** has just exited the mold. Its end strands have been infused with liquid potting compound. They are thus denoted as infused strands **40.**

As cable **10** moves further down the line, anchor fork **42** (or other suitable devices, whether automatic or manual), may be employed to pull anchor **18** into the appropriate position before the liquid potting compound hardens. Similar devices can be employed to retain the anchors in the appropriate positions throughout the process.

The same process can be applied where a mold is substituted for anchor **18.** In other words, a mold can be pulled in place over the strands while they are allowed to set. This mold can then be removed and the strands placed in a separate anchor.

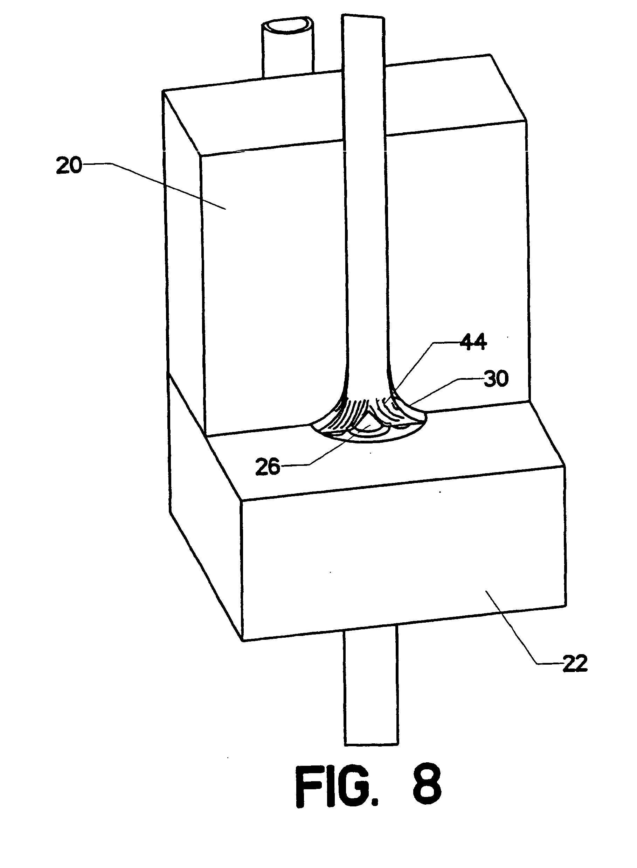

Those skilled in the art will realize that the internal cavities within the mold components, as well as the infeed runners and vents, can be made in virtually any shape. Multicavity molds can also be used to increase the feed rates. Returning to FIG. 1, the reader will appreciate that the mold can be configured to clamp the fibers in any one of the four configurations shown (as well as others). As an example, FIG. 8 shows a mold having a strand cavity **30** shaped to deform the strands into radially fanned strands **44** (The cable is shown sectioned to aid visualization). A separator **26** is also used.

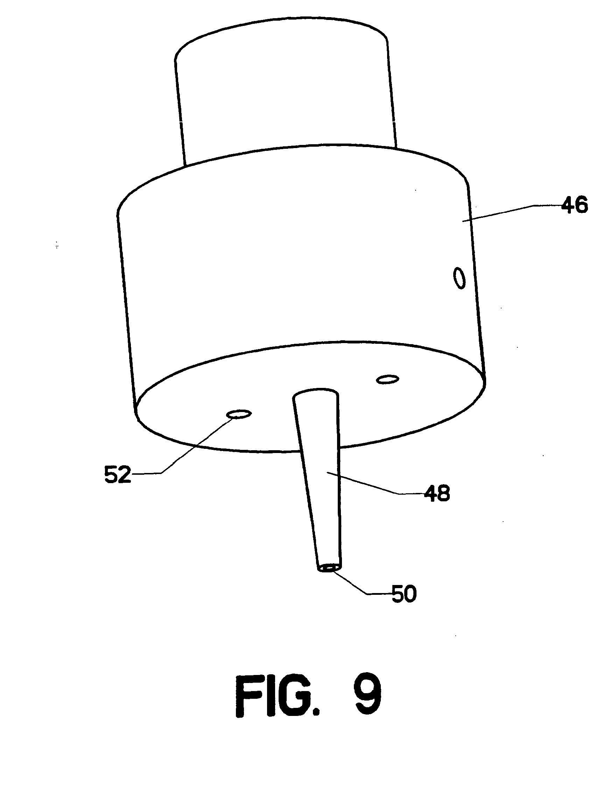

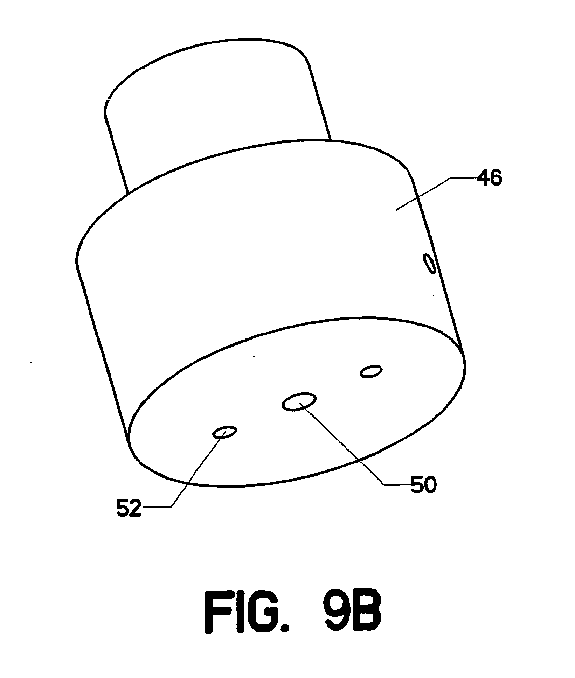

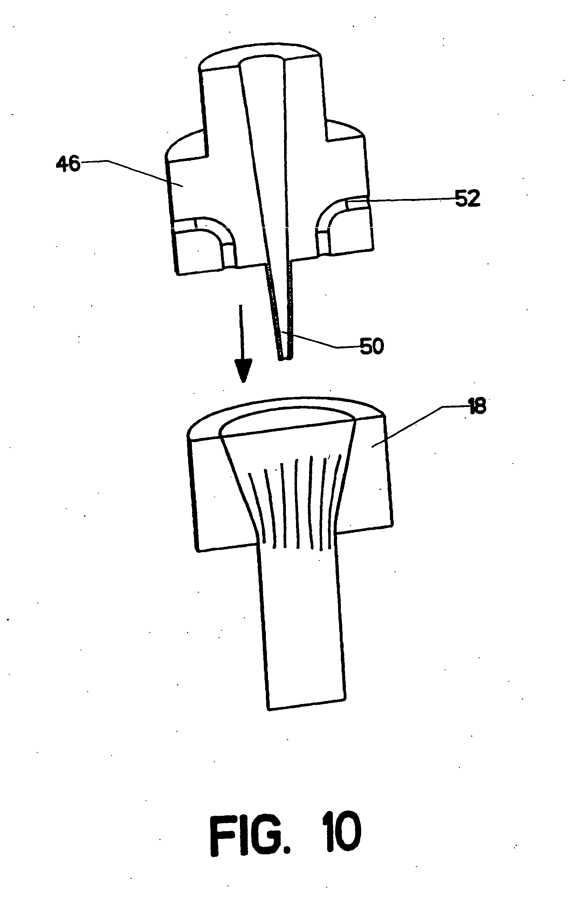

The injection process can even be modified to infuse the liquid potting compound from the center of the exposed strands outward. FIG. 9 shows injector **46.** Needle **48** extends from its lower surface. Injection orifice **50** passes through needle **48** (The orifice can assume a variety of shapes). The lower surface also opens into a pair of vents **52.** FIG. 10 shows injector **46** in a section view. Injection orifice **50** is connected to a supply of liquid potting compound (not shown). Vents **52** can be vented to the surrounding air. In operation, a mold is placed around the dry exposed strands on the end of a cable. For the example shown, an anchor **18** is actually used as the mold (Split molds such as shown previously could also be used). The anchor has an expanding internal passage which serves as a strand cavity. It also has an open end. Injector **46** is moved toward the exposed strands as indicated.

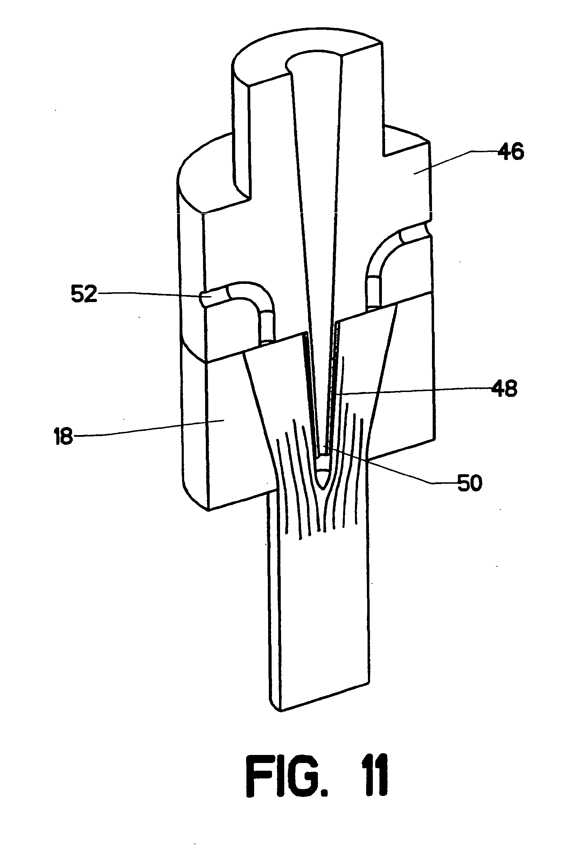

FIG. 11 shows injector **46** mated to anchor **18.** The lower surface of injector **46** is actually pressed against the upper surface of anchor **18** to form a sealing surface. Needle **48** protrudes down into the exposed strands. Liquid potting compound is then infused through injection orifice **50.** It flows out through the strands toward the two vents **52,** thereby completely infusing the strands within the anchor's internal passage. Once the infusion is completed, injector **46** is withdrawn. The liquid potting compound then hardens to complete the termination.

Those skilled in the art will realize that injector **46** can take many forms, including breaking the injector into two or more pieces (like a mold). Needle **48** is optional. The injection could be accomplished via forcing the liquid potting compound through a simple hole. Such an alternate embodiment is shown in FIG. 9B. Likewise, the seal between injector **46** and anchor **18** can be achieved using many methods, including an O-ring or interlocking threads. With the anchor itself forming the mold, it may be advisable to add infeed runners or vents to the anchor. These features could take many shapes.

As stated previously, a split mold can be used in the place of anchor **18.** In such a case, the anchor would be added after the infusion process is complete.

Throughout the preceding disclosure, terms referring to the orientation of the parts have been used ("upper", "lower", etc.). Those skilled in the art will realize that the orientation of the components has no significant impact on the operation of the devices. These terms referred only to the orientations shown in the views, and should not be taken as limiting the scope of the invention.

Although the preceding description contains significant detail, it should not be construed as limiting the scope of the invention but rather as providing illustrations of the preferred embodiments of the invention, as defined in the claims.

## Claims

1. A method for attaching an anchor (18) having an internal passage and an open end to a region of strands (40) on an end of a cable (10) , comprising:
a. exposing said region of strands (40) in said cable (10);
b. placing said region of strands (40) within said internal passage of said anchor (18);
the method being **characterized by**:-
c. providing an injector (46), including
i. a sealing surface;
ii. a needle (48), extending from said sealing surface, having a first end proximate said sealing surface and a second end distal to said sealing surface;
iii. an injection orifice (50) proximate said second end of said needle (48);
d. clamping said injector (46) against said open end of said anchor (18) so that said needle (48) protrudes into said region of strands (40) and said sealing surface seals said open end of said anchor (18);
e. providing a potting compound which transitions from a liquid state to a solid state over time;
f. injecting said potting compound, in said liquid state, under pressure into said strand cavity through said injection orifice (50), so that said liquid potting compound infuses throughout said region of strands (40);
g. withdrawing said needle (48) while said potting compound is still in said liquid state; and
h. allowing said liquid potting compound to harden into a solid, thereby locking said region of strands (40) within said anchor (18).

2. A method as recited in claim 1, wherein said step of exposing said region of strands (40) comprises splaying said region of strands (40) into a fan.

3. A method as recited in claim 1, wherein said step of exposing said region of strands (40) comprises splaying said region of strands (40) into a cone.

4. A method as recited in claim 1, wherein said step of exposing said region of strands (40) comprises splaying said region of strands (40) into a radial fan.

5. A method as recited in claim 1, comprising the additional step of providing said injector (46) with a vent (52).

6. A method as recited in claim 5, comprising the additional step of applying a vacuum to said vent (52).

## Patentansprüche

1. Eine Methode zur Befestigung eines Ankers (18) mit einem inneren Durchgang und einem offenen Ende an einem Litzenbereich (40) am Ende eines Seils (10), umfassend:
a. Freilegung des Litzenbereichs (40) im Kabel (10);
b. Platzierung des Litzenbereichs (40) innerhalb des inneren Durchgangs des Ankers (18);
wobei die Methode **gekennzeichnet ist durch**:
c. Bereitstellung eines Injektors (46) mit
i. einer Dichtungsfläche;
ii. einer Nadel (48), die sich von der Dichtungsfläche erstreckt und ein erstes, an der Dichtungsfläche befindliches Ende und ein zweites, distal zur Dichtungsfläche befindliches Ende besitzt;
iii. eine Injektionsöffnung (50) am zweiten Ende der Nadel (48);
d. Verklammern des Injektors (46) mit dem offenen Ende des Ankers (18), so dass die Nadel (48) in den Litzenbereich (40) hineinreicht und die Dichtungsfläche das offene Ende des Ankers (18) abdichtet;
e. Bereitstellung einer Vergussmasse, die im Laufe der Zeit vom flüssigen in den festen Zustand übergeht;
f. Einspritzen der im flüssigen Zustand befindlichen Vergussmasse unter Druck **durch** die Injektionsöffnung (50) in den Litzenhohlraum, so dass die flüssige Vergussmasse den gesamten Litzenbereich (40) infundiert;
g. Zurückziehen der Nadel (48), während sich die Vergussmasse noch im flüssigen Zustand befindet; und
h. Aushärtenlassen der flüssigen Vergussmasse in den festen Zustand, wodurch der Litzenbereich (40) im Anker (18) fixiert wird.

2. Eine Methode nach Anspruch 1, wobei der Schritt der Freilegung des Litzenbereichs (40) die Aufweitung des Litzenbereichs (40) zu einem Fächer umfasst.

3. Eine Methode nach Anspruch 1, wobei der Schritt der Freilegung des Litzenbereichs (40) die Aufweitung des Litzenbereichs (40) zu einem Konus umfasst.

4. Eine Methode nach Anspruch 1, wobei der Schritt der Freilegung des Litzenbereichs (40) die Aufweitung des Litzenbereichs (40) zu einem radialen Fächer umfasst.

5. Eine Methode nach Anspruch 1, bei der als zusätzlichen Schritt eine Entlüftungsöffnung (52) am Injektor (46) bereitgestellt wird.

6. Eine Methode nach Anspruch 5, bei der als zusätzlicher Schritt an die Entlüftungsöffnung (52) ein Vakuum angelegt wird.

## Revendications

1. Procédé de fixation d'une ancre (18) comportant un passage interne et une extrémité ouverte à une portion de torons de câble (40) d'une extrémité d'un câble (10), comprenant les étapes suivantes :
a. exposer ladite portion de torons de câble (40) dudit câble (10) ;
b. placer ladite portion de torons de câble (40) dans ledit passage interne de ladite ancre (18) ;
le procédé étant **caractérisé en ce qu'**il :
c. concerne un injecteur (46), comprenant
i. une surface de scellement ;
ii. une aiguille (48) s'étendant de ladite surface de scellement, comprenant une première extrémité proximale de ladite surface de scellement et une deuxième extrémité distale de ladite surface de scellement ;
iii. un orifice d'injection (50) proximal de ladite deuxième extrémité de ladite aiguille (48) ;
d. bloquer ledit injecteur (46) contre ladite extrémité ouverte de ladite ancre (18) de telle façon que ladite aiguille (48) fasse saillie dans ladite portion de torons de câble (40) et que ladite surface de scellement scelle de façon étanche ladite extrémité ouverte de ladite ancre (18) ;
e. alimenter une composition d'enrobage qui passe d'un état liquide à un état solide avec le temps ;
f. injecter ladite composition d'enrobage, dans ledit état liquide, sous pression dans ladite cavité des torons de câble à travers ledit orifice d'injection (50), de telle sorte que ledit composé d'enrobage liquide enrobe toutes lesdites portions de torons de câble (40) ;
g. retirer ladite aiguille (48) alors que ledit composé est encore dans ledit état liquide ; et
h. permettre audit composé d'enrobage liquide de se solidifier, retenant de la sorte ladite portion de torons de câble (40) dans ladite ancre (18).

2. Procédé selon la revendication 1, dans ce procédé ladite étape consistant à exposer ladite portion de torons de câble (40) comprend l'épanouissement de ladite portion de torons de câble (40) en un éventail.

3. Procédé selon la revendication 1, dans ce procédé ladite étape consistant à exposer ladite portion de torons de câble (40) comprend l'épanouissement de ladite portion de torons de câble (40) en un cône.

4. Procédé selon la revendication 1, dans ce procédé ladite étape consistant à exposer ladite portion de torons de câble (40) comprend l'épanouissement de ladite portion de torons de câble (40) en un éventail radial.

5. Procédé selon la revendication 1, comprenant l'étape supplémentaire consistant à doter ledit injecteur (46) d'un orifice (52).

6. Procédé selon la revendication 5, comprenant l'étape supplémentaire consistant à appliquer un vide audit orifice (52).
